(19) Europäisches Patentamt

European Patent Office

Office européen des brevets

(11) Numéro de publication: **0 032 648**
**B1**

(12) **FASCICULE DE BREVET EUROPEEN**

(45) Date de publication du fascicule du brevet: **10.04.85**

(21) Numéro de dépôt: **80420145.7**

(22) Date de dépôt: **17.12.80**

(51) Int. Cl.⁴: **G 01 N 3/40**, G 01 N 33/24, E 02 D 1/02

(54) **Pénétromètre statique.**

(30) Priorité: **18.01.80 FR 8001557**

(43) Date de publication de la demande:
**29.07.81 Bulletin 81/30**

(45) Mention de la délivrance du brevet:
**10.04.85 Bulletin 85/15**

(84) Etats contractants désignés:
**BE DE GB IT NL SE**

(56) Documents cités:
**DE-C- 568 912
FR-A-1 587 397
FR-A-2 425 650
US-A-3 872 717
US-A-3 961 524**

**Le dossier contient des informations
techniques présentées postérieurement au
dépôt de la demande et ne figurant pas dans le
présent fascicule.**

(73) Titulaire: **Barnoud, François
12, Rue Chancelier-de-l'Hospital
F-21000 Dijon (FR)**
(73) Titulaire: **Labays, Jean-Bernard
Saint-Martin-sous-Montaigu
F-71640 Givry (FR)**

(72) Inventeur: **Barnoud, François
12, Rue Chancelier-de-l'Hospital
F-21000 Dijon (FR)**
Inventeur: **Labays, Jean-Bernard
Saint-Martin-sous-Montaigu
F-71640 Givry (FR)**

(74) Mandataire: **Maureau, Pierre
Cabinet GERMAIN & MAUREAU Le Britannia -
Tour C 20, Boulevard E. Déruelle
F-69003 Lyon (FR)**

EP 0 032 648 B1

## Description

La présente invention concerne un pénétromètre statique, du genre comprenant un élément descendu dans le sol et servant de logement à un vérin d'axe sensiblement horizontal dont le piston, soumis sur l'une au moins de ses faces à la pression d'un fluide hydraulique on pneumatique, est solidaire d'une tige apte à être enfoncée latéralement dans le sol ou rétractée à l'intérieur de l'élément précité, des moyens étant prévus pour repérer la position de ladite tige et mesurer la pression exercée sur celle-ci, ledit élément étant solidaire de l'extrémité inférieure d'un train de tiges servant à descendre ledit élément dans le sol, cet élément étant aussi relié à des tubulures de fluide hydraulique ou pneumatique ainsi qu'à d'autres lignes de liaison.

Un tel appareil permet d'effectuer des essais de pénétration en vue de la reconnaissance des sols et, plus particulièrement de la mesure "in situ" de la résistance statique des sols.

L'essai de pénétration, moyen de reconnaissance des sols couramment utilisé, consiste habituellement à foncer dans le sol, de haut en bas, une sonde placée à l'extrémité inférieure d'un train de tubes ou de tiges. Ce fonçage peut s'effectuer: soit par battage, au moyen d'un mouton qui vient frapper une enclume solidaire du sommet du train de tubes ou de tiges, le dispositif étant alors appelé "pénétromètre dynamique"; soit par vérinage à vitesse lente, auquel cas il s'agit d'un "pénétromètre statique". La réaction, qu'il convient d'exercer pour foncer un tel pénétromètre statique, et qui devient considérable dès que le sol est compact, est fournie soit par des ancrages, soit par le poids du véhicule sur lequel est fixé l'appareil, ce qui impose l'emploi de dispositifs encombrants et parfois inefficaces (ancrages), ou d'un engin sur roues lourd (15 à 18 tonnes) qu'il n'est pas toujours possible d'amener sur les sites "difficiles".

D'autres appareils, appartenant au genre indiqué en introduction, sont des pénétromètres statiques dans lesquels l'enfoncement vertical est remplacé par un enfoncement latéral d'une tige poussée par un vérin d'axe horizontal, logé à l'intérieur d'un élément descendu dans le sol. Un tel appareil est décrit par le brevet US—A—3 872 717, où l'élément descendu dans le sol est un corps de forme cylindrique, fixé à l'extrémité inférieure d'un train de tiges pleines, et muni de stabilisateurs latéraux qui assurent la réaction à l'effort de pénétration de la tige latérale. Cet appareil possède les inconvénients suivants:

— En raison de la forme cylindrique de l'élément descendu dans le sol, l'appareil ne peut être utilisé qu'après forage préalable d'un trou dans le sol.

— Le train de tiges pleines ne permet pas une protection des tubulures de fluide et des liaisons électriques reliant l'élément introduit dans le trou à l'appareillage situé à la surface.

— Les stabilisateurs latéraux offrent une surface limitée pour absorber la réaction à l'enfoncement de la tige latérale, et la présence de ces stabilisateurs, relativement encombrants, réduit le diamètre utile de l'élément descendu dans le sol, donc limite la course de la tige latérale à une valeur faible, relativement au diamètre du forage.

Un autre appareil partiellement similaire au précédent est décrit dans la demande de brevet français FR—A—2 425 650. Cet appareil comporte toujours un corps de forme cylindrique qui doit être descendu dans un trou préalablement foré et muni d'un tubage. L'appareil comporte deux vérins diamétralement opposés, d'axe horizontal, qui déplacent des sabots latéraux, lesquels constituent des moyens d'ancrage et non pas des moyens de mesure de la résistance du sol à la pénétration d'un tige. Même s'il s'agissait de tiges permettant une mesure, leur course serait là aussi bien faible, relativement au diamètre du forage, en raison de la disposition avec deux vérins diamétralement opposés. Enfin, cet appareil est simplement suspendu à un câble et/ou à des tubulures hydrauliques, et non pas maintenu mécaniquement à l'extrémité inférieure d'un train de tiges.

La présente invention vise à remèdier à ces inconvénients; son but est donc de fournir un appareil pouvant être directement foncé dans le sol, sans forage préalable, assurant une parfaite protection des tubulures de fluide et autres liaisons existant entre l'appareil et la surface, et procurant une course maximale de la tige enfoncée latéralement dans le sol tout en assurant convenablement la réaction à l'enfoncement de cette tige.

A cet effet, dans le pénétromètre statique objet de l'invention, l'élément servant de logement au vérin précité est une pointe cylindro-conique apte à être foncée dans le sol, l'effort de réaction à l'enfoncement de la tige dans le sol étant fourni par le contact latéral de cette pointe cylindro-conique sur le sol, et les tiges dudit train de tiges sont constituées par des tubes renfermant les tubulures de fluide et les autres lignes de liaison.

Avec un tel appareil, l'essai de pénétration statique s'effectue suivant un axe horizontal, à toute profondeur souhaitée, au moyen d'un vérin de préférence à double effet, logé à l'intérieur d'une pointe cylindro-conique, de diamètre important dans sa partie cylindrique, pointe foncée dans le sol par l'intermédiaire du train de tubes qui a aussi pour fonction d'assurer la protection des tubulures de fluide hydraulique ou pneumatique ainsi qui des liaisons électriques. L'effort de réaction à l'enfoncement de la tige est fourni par le contact latéral sur le sol de l'élément foncé et peut être très nettement supérieur à l'effort de pénétration, compte tenu du rapport des surfaces de la tige et de l'élément foncé. La tige peut ainsi être introduite dans le sol sous une pression connue, puis rétractée à la fin de l'essai dans son logement, de manière à poursuivre le fonçage vertical de l'élément qui la contient, avant d'effectuer un nouvel essai à une autre profondeur. L'appareil permet ainsi, par des mesures de pression et de déplacement, de connaître la résistance à la pénétration statique du sol, l'interprétation de l'essai étant la même que pour un essai de pénétration statique classique, la seule différence étant que la mesure s'effectue selon un axe horizontal; la lecture de la pression aux différents stades d'enfoncement de la tige permet une mesure de la résistance du sol, à une profondeur donnée. Si l'on désire effectuer des mesures selon plusieurs directions, à une même profondeur, il est possible, une fois la tige rétractée, de faire pivoter l'élément foncé ou foré, autour de son axe vertical, d'un angle voulu, et de procéder alors à un second essai selon une autre direction; l'opération peut être, éventuellement, répétée une troisième, une quatrième fois ...

L'invention donne lieu à diverses formes de réalisation, suivant les moyens prévus pour déplacer la tige, dans le sens de son enfoncement dans le sol et de sa rétraction, et pour mesurer pressions et déplacements.

Dans une première forme de réalisation, la pression sur le piston du vérin d'axe horizontal est exercée, au moins dans le sens de l'enfoncement de la tige dans le sol, par l'intermédiaire d'un fluide hydraulique mis en pression par un gaz comprimé fourni par une source de gaz, des moyens étant prévus pour mesurer la pression et le volume de ce dernier, en vue de connaître la résistance du sol et repérer la position de la tige. Le vérin peut être à double effet, auquel cas c'est le gaz précité qui, agissant directement sur l'autre face du piston, permet de rétracter la tige. En variante, toujours dans le cas ici considéré où un liquide transmet la pression destinée à enfoncer la tige dans le sol et permet également le repérage en position de cette tige, l'effort de rappel, tendant à rétracter ladite tige, peut être fourni par un ressort hélicoïdal. Selon le cas, deux tubulures souples, ou une seule, assurent la liaison entre l'appareillage situé à l'air libre et l'élément descendu dans le sol qui renferme le vérin d'axe horizontal. De préférence, la tubulure souple qui renferme le fluide hydraulique est entourée d'une tubulure coaxiale, contenant du gaz, afin d'annuler les dilatations parasites de la tubulure intérieure.

Dans une autre forme de réalisation, la pression sur le piston du vérin d'axe horizontal est exercée, au moins dans le sens de l'enfoncement de la tige dans le sol, par l'intermédiaire d'un fluide indifféremment pneumatique ou hydraulique, mais la position de la tige est repérée par un capteur de déplacement électrique ou électronique, du type inductif par exemple. Pour la mesure de la pression pneumatique ou hydraulique s'appliquant sur le piston du vérin, on peut dans ce cas utiliser également un transducteur électronique; une mesure manométrique reste cependant possible.

De toute façon, l'invention sera bien comprise à l'aide de la description qui suit, en référence au dessin schématique annexé représentant, à titre d'exemples non limitatifs, quelques formes de réalisation de ce pénétromètre statique:

Figure 1 est une vue en coupe verticale, passant par l'axe, de la pointe d'un pénétromètre conforme à l'invention;

Figure 2 représente, très schématiquement, les circuits d'alimentation et de mesure associés à la pointe de la figure 1;

Figure 3 montre, en coupe verticale passant par l'axe, une variante de la pointe selon la figure 1;

Figure 4 représente, en coupe verticale passant par l'axe, encore une autre forme de réalisation de la pointe d'un pénétromètre conforme à l'invention;

Figure 5 est une vue, très schématique, des circuits d'alimentation et de mesure associés à la pointe de la figure 4.

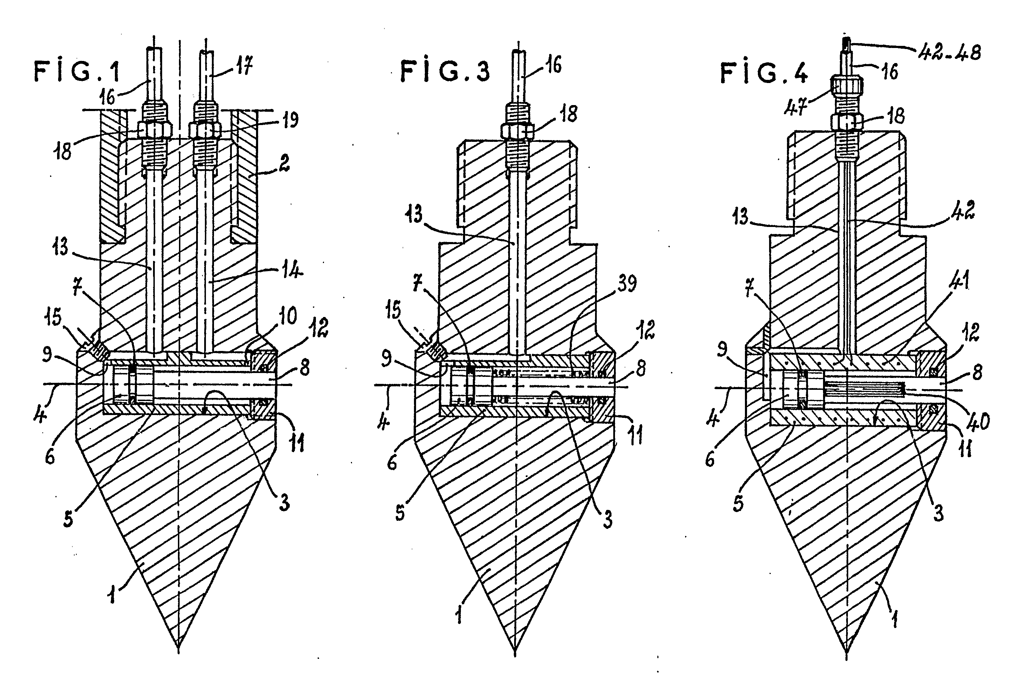

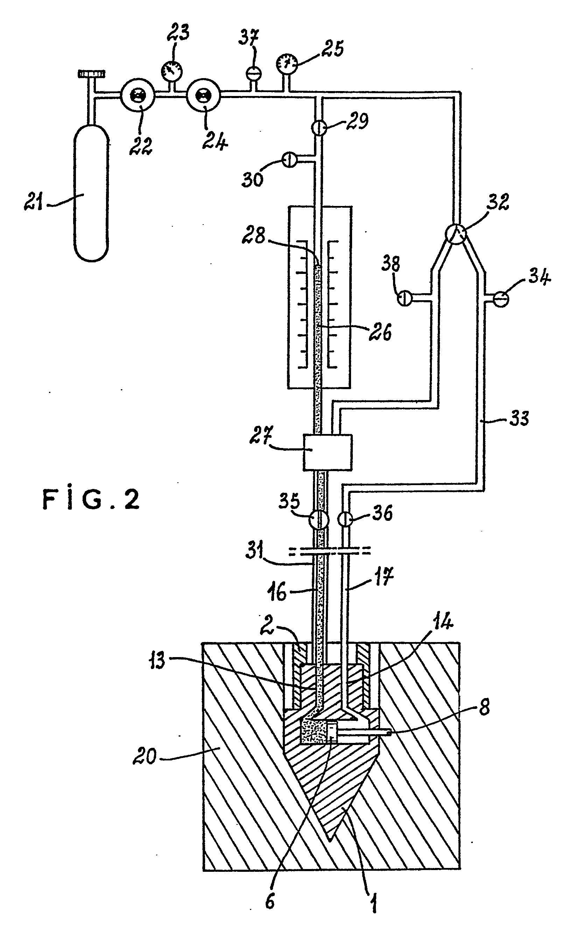

La figure 1 montre la pointe cylindro-conique 1 d'un pénétromètre, solidaire de l'extrémité inférieure d'un train de tubes ou de tiges 2 foncé dans le sol selon les procédés classiques. La pointe 1 comporte, dans sa partie cylindrique, un alésage 3 d'axe horizontal 4, débouchant latéralement. Dans l'alésage 3 est logé un petit vérin à double effet, comprenant une chemise extérieure 5 sertie dans cet alésage et un piston 6, avec joint d'étanchéité 7, solidaire d'une tige 8. La chemise 5 présente, à ses deux extrémités, des lumières 9 et 10 pour l'alimentation en fluide du vérin; elle est maintenue en place par une bague vissée 11 avec joint d'étanchéité 12, traversée par la tige 8. La pointe 1 possède deux canaux verticaux 13 et 14, en communication par leurs extrémités inférieures avec les lumières respectives 9 et 10. Enfin la pointe 1 comporte une vis de purge 15.

Des fluides sous pression sont amenés à l'ensemble précédemment décrit au moyen de tubulures souples 16 et 17, connectées aux extrémités supérieures de canaux 13 et 14 par l'intermédiaire de raccords respectifs 18 et 19. Un fluide hydraulique agit sur la face du piston 6 opposée à la tige 8, et force cette dernière à pénétrer horizontalement dans le sol 20, comme illustré très schématiquement sur la figure 2 qui montre, également, les circuits d'alimentation et de mesure, décrits ci-après:

Le fluide hydraulique est mis en pression par l'intermédiaire d'un gaz comprimé (air ou azote), fourni par une bouteille 21 équipée d'un détendeur 22 et d'un manomètre 23. Un second détendeur 24 permet de régler finement la pression mesurée par un manomètre de précision 25. Ce circuit pneumatique est relié à une tubulure transparente et graduée 26, aboutissant à un boîtier 27, auquel est raccordée aussi la tubulure souple 16. La surface de séparation gaz-fluide hydraulique 28 est située en regard des graduations de la tubulure 26, et ceci permet de connaître avec précision la position de la tige 8, lorsque celle-ci pénètre dans le sol 20. Le gaz est admis dans la tubulure transparente et graduée 26 au travers d'une vanne 29, en aval de laquelle est encore prévu un robinet de purge 30.

La tubulure de fluide hydraulique 16 est entourée d'une tubulure coaxiale 31, contenant du gaz, de manière à annuler les dilatations parasites de la tubulure intérieure. La tubulure 31 est mise en communication avec la source de gaz, par l'intermédiaire d'une vanne 32 et du boîtier 27 déjà mentionné.

La vanne 32 permet le passage du gaz soit en direction du boîtier 27, soit vers la tubulure souple 17 par l'intermédiaire d'une autre tubulure 33, sur laquelle est prévu un robinet de purge 34. Pour rétracter la tige 8, on coupe la pression du circuit hydraulique, au moyen de la vanne 29 et du robinet de purge 30, et l'on applique une pression de gaz sur la face du piston 6 située du côté de la tige 8; à cet effet, la vanne 32 est basculée en direction des tubulures 33 et 17, après fermeture du robinet de purge 34.

Des raccords rapides sans variation de volume 35 et 36 sont, de préférence, montés entre les tubulures 16-31 et 17, d'une part, et les circuits d'alimentation et de mesure situés à l'air libre, d'autre part, de manière à permettre de manoeuvres faciles, au fur et à mesure que la pointe 1 servant de logement au vérin progresse en profondeur, par adjonction de tubes ou de tiges 2.

L'ensemble des circuits est encore complété par deux autres robinets de purge 37 et 38.

La figure 3 représente une variante de la pointe 1, les éléments correspondant à ceux de la figure 1 étant désignés par les mêmes repères. A la différence de la première forme de réalisation précédemment décrite, l'effort de rappel du piston 6, pour la rétraction de la tige 8, n'est pas assuré par un circuit de gaz comprimé. Ainsi la tubulure 17, le canal 14 et la lumière 10 sont supprimés. A la place, est prévu un ressort de rappel hélicoïdal taré 39, logé entre la chemise extérieure 5 et la tige 8, et comprimé entre une face du piston 6 et la bague 11. Les circuits d'alimentation et de mesure peuvent toujours être réalisés selon le schéma de la figure 2 mais, bien entendu, la tubulure de gaz 33 n'est alors plus nécessaire.

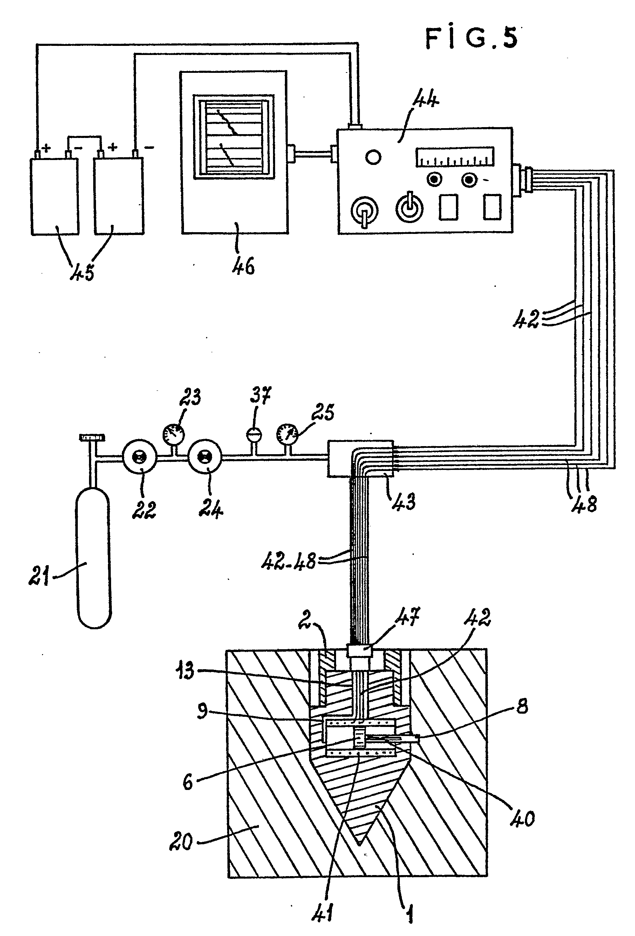

Dans une autre forme de réalisation, illustrée par les figures 4 et 5, l'ensemble piston 6-tige 8 est équipé d'un noyau magnétique 40, et la chemise 5 comprend des enroulements électro-magnétiques 41 constituant deux bobines connectées en demi-pont, de sorte que le mouvement du noyau 40 à l'intérieur de ces bobines détermine un déséquilibre inductif, le tout formant un capteur inductif de déplacement classique.

Comme dans la première forme de réalisation décrite, la pression permettant la pénétration horizontale de la tige 8 dans le sol 20 est fournie par une bouteille de gaz comprimé 21, et transmise jusqu'à une face du piston 6 par l'intermédiaire d'une tubulure 16, d'un canal 13 et d'une lumière 9. Cette pression est mesurée par un manomètre 25 situé à la sortie d'un détendeur 24; la pression pneumatique est appliquée soit directement, soit par l'intermédiaire d'un fluide hydraulique comme sur le schéma de la figure 2. Les moyens ici utilisés pour la rétraction de la tige 8 ne sont pas représentés, pour la clarté du dessin, mais ils peuvent, bien entendu, être réalisés suivant les solutions illustrées par les figures 1 à 3.

A chaque position de la tige 8 correspond une valeur de l'intensité du courant nécessaire à l'équilibrage du pont. Pour alimenter les bobines 41 et effectuer la mesure, ces bobines sont raccordées à trois fils électriques 42, qui passent à l'intérieur de la tubulure souple 16 puis en sortent par un boîtier de dérivation 43, situé sur la partie à l'air libre de ladite tubulure 16. Ces fils 42 aboutissent à un boîtier de mesure 44, alimenté par deux piles électriques 45 montées en série, et pouvant être relié à un enregistreur à bande 46.

Dans une variante illustrée par les mêmes figures 4 et 5, la pression s'appliquant sur le piston 6 du vérin est mesurée par un transducteur électronique de pression 47, placé par exemple sur le raccord 18, ce transducteur délivrant un signal transmis, par l'intermédiaire de fils électriques supplémentaires 48, jusqu'au boîtier de mesure 44 éventuellement relié à l'enregistreur à bande 46.

On peut aussi équiper la tige 8 d'un capteur de déplacement, de type potentiomètre linéaire, dont la variation de résistance devient, alors, la grandeur mesurée par le boîtier 44. Sur les figures, la tige 8 a été représentée avec un diamètre inférieur à celui du piston 6, mais ce rapport de diamètres peut être inversé, pour accroître la sensibilité de l'appareil dans les sols peu résistants.

L'élément logeant le vérin a été représenté comme étant une pointe cylindro-conique 1, formant ellemême une sonde de pénétromètre dynamique, battue dans le sol par un mouton selon les procédés habituels dans ce domaine technique, auquel cas le dispositif selon l'invention permet de compléter la pénétration dynamique par un essai de pénétration statique, à toute profondeur souhaitée.

**Revendications**

1. Pénétromètre statique, comprenant un élément (1) descendu dans le sol (20) et servant de logement à un vérin (5, 6) d'axe sensiblement horizontal (4) dont le piston (6), soumis sur l'une au moins de ses faces à la pression d'un fluide hydraulique ou pneumatique, est solidaire d'une tige (8) apte à être enfoncée latéralement dans le sol (20) ou rétractée à l'intérieur de l'élément précité (1), les moyens (26, 40, 41, 47) étant prévus pour repérer la position de ladite tige (8) et mesurer la pression exercée sur celle-ci, ledit élément étant solidaire de l'extrémité inférieure d'un train de tiges (2) servant à descendre ledit élément dans le sol, cet élément étant aussi relié à des tubulures de fluide hydraulique ou pneumatique ainsi qu'à d'autres lignes de liaison, caractérisé en ce que l'élément servant de logement au vérin précité est une pointe cylindro-conique (1) apte à être foncée dans le sol (20), l'effort de réaction à l'enfoncement de la tige (8) dans le sol (20) étant fourni par le contact latéral de cette pointe cylindro-conique (1) sur le

7 **0 032 648** 8

sol, et en ce que les tiges dudit train de tiges sont constituées par des tubes (2) renfermant les tubulures de fluide (16, 17) et les autres lignes de liaison (42, 48).

2. Pénétromètre statique selon la revendication 1, caractérisé en ce que la pression sur le vérin (5) d'axe horizontal (4) est exercée, au moins dans le sens de l'enfoncement de la tige (8) dans le sol (20), par l'intermédiaire d'un fluide hydraulique mis en pression par un gaz comprimé fourni par une source de gaz (21), des moyens (25, 26) étant prévus pour mesurer la pression et le volume de ce dernier, en vue de connaître la résistance du sol (20) et repérer la position de la tige (8).

3. Pénétromètre statique selon la revendication 2, caractérisé en ce que le vérin (5) est à double effet, le gaz precité agissant directement sur l'autre face du piston (6) pour rétracter la tige (8).

4. Pénétromètre statique selon la revendication 2, caractérisé en ce que les tubulures comportent une seule tubulure souple (16) transmettant la pression destinée à enfoncer la tige (8) dans le sol (20), l'effort de rappel, tendant à rétracter ladite tige (8), étant fourni par un ressort hélicoïdal (39).

5. Pénétromètre statique selon l'une quelconque des revendications 2 ou 3, caractérisé en ce que lesdites tubulures comportent deux tubulures souples (16, 17) qui assurent la liaison entre l'appareillage situé à l'air libre et l'élément (1) descendu dans le sol (20) et dont l'une renferme le fluide hydraulique agissant dans le sens de l'enfoncement de la tige (8) tandis que l'autre est prévue pour la rétraction de ladite tige (8), la tubulure souple (16) qui renferme le fluide hydraulique étant, de préférence, entourée d'une tubulure coaxiale (31) contenant du gaz.

6. Pénétromètre statique selon la revendication 5, caractérisée en ce que la source de gaz (21) est apte à être mise en communication, par l'intermédiaire d'une vanne (32), soit avec la tubulure coaxiale (31), soit avec l'autre desdites tubulures souples.

7. Pénétromètre statique selon la revendication 1, caractérisé en ce que la position de la tige (8), enfoncée latéralement dans le sol (20), est repérée par un capteur de déplacement du type inductif (40, 41), dont les enroulements électro-magnétiques sont situés dans la chemise extérieure (5) du vérin d'axe horizontal (4).

8. Pénétromètre statique selon la revendication 7, caractérisé en ce que la mesure de la pression pneumatique ou hydraulique s'appliquant sur le piston (6) du vérin (5) est faite par un transducteur électronique (47).

**Patentansprüche**

1. Statische Penetrometervorrichtung, beinhaltend ein Element (1), das in den Boden (20) abgesenkt ist und als Aufnahme für einen Zylinder (5, 6) horizontaler Achse (4) dient, dessen Kolben (6), der auf mindestens einer seiner Flächen dem Druck eines hydraulischen oder pneumatischen Mediums ausgesetzt ist, fest mit einer Stange (8) verbunden ist, die seitlich in den Boden (20) eintriebbar oder in das Innere des genannten Elementes (1) zurückziehbar ist, wobei Mittel (26, 40, 41, 47) zur Feststellung der Stellung der genannten Stange (8) und zum Messen des auf sie ausgeübten Druckes vorgesehen sind, und das genannte Element mit dem unteren Ende eines Stangenzuges (2) fest verbunden ist, der dazu dient, das genannte Element in den Boden abzusenken und dieses Element ferner mit Anschlußrohren für das hydraulische oder pneumatische Medium sowie mit anderen Verbindungsleitungen verbunden ist, dadurch gekennzeichnet, daß das der Aufnahme des genannten Zylinders dienende Element eine zylindrisch-konische Spitze (1) ist, die in den Boden (20) eintreibbar ist, wobei sich die Gegenkraft zur Eintreibung der Stange (8) in den Boden (20) aus dem seitlichen Kontakt dieser zylindrischkonischen Spitze (1) gegenüber dem Boden ergibt, und daß die Stangen des genannten Stangenzuges aus Rohren (2) gebildet sind, die die Anschlußrohre (16, 17) für das Medium und die anderen Verbindungsleitungen (42, 48) umschließen.

2. Statische Penetrometervorrichtung nach Anspruch 1, dadurch gekennzeichnet, daß der Druck auf den Zylinder (5) horizontaler Achse (4) zumindest im Sinne der Eintreibung der Stange (8) in den Boden (20) mittels eines hydraulischen Mediums ausgeübt wird, das durch ein komprimiertes Gas unter Druck gesetzt ist, das durch eine Gasquelle (21) geliefert wird, wobei Mittel (25, 26) zur Messung des Druckes und des Volumens des letzteren im Hinblick auf die Erkennung des Widerstandes des Bodens (20) und der Feststellung der Stellung der Stange (8) vorgesehen sind.

3. Statische Penetrometervorrichtung nach Anspruch 2, dadurch gekennzeichnet, daß ein doppeltwirkender Zylinder (5) vorgesehen ist, wobei das genannte Gas direkt auf die andere Fläche des Kolbens (6) für das Zurückziehen der Stange (8) wirkt.

4. Statische Penetrometervorrichtung nach Anspruch 2, dadurch gekennzeichnet, daß die Anschlußrohre ein einziges biegsames Rohr (16) aufweisen, das den zur Eintreibung der Stange (8) in den Boden (20) bestimmten Druck überträgt, wobei die Rückstellkraft für die Zurückziehung der genannten Stange (8) durch eine Schraubfeder (39) erzeugt wird.

5. Statische Penetrometervorrichtung nach einem der Ansprüche 2 oder 3, dadurch gekennzeichnet, daß die genannten Anschlußrohre zwei biegsame Rohre (16, 17) aufweisen, die die Verbindung zwischen dem im Freien liegenden Gerät und dem in den Boden (20) abgesenkten Element (1) bilden und von denen eines das hydraulische Medium umschließt, das im Sinne der Eintreibung der Stange (8) wirkt, während das andere für die Zurückziehung der Stange (8) vorgesehen ist, wobei das biegsame Rohr (16), das das hydraulische Medium umschließt, vorzugsweise von einem koaxialen, Gas enthaltenden Rohrstück (31) umgeben ist.

6. Statische Penetrometervorrichtung nach Anspruch 5, dadurch gekennzeichnet, daß die Gasquelle (21) mittels eines Ventils (32), sei es mit dem koaxialen Rohrstück (31), sei es mit dem anderen der genannten biegsamen Rohre, in leitende Verbindung zu setzen ist.

7. Statische Penetrometervorrichtung nach Anspruch 1, dadurch gekennzeichnet, daß die Stellung der seitlich den Boden (20) eingetriebenen Stange (8) durch einem induktiven Wegmesser (40, 41) feststellbar ist, dessen elektromagnetische Windungen in dem äußeren Mantel (5) des Zylinders mit horizontaler Achse (4) angeordnet sind.

8. Statische Penetrometervorrichtung nach Anspruch 7, dadurch gekennzeichnet, daß die Messung des pneumatischen oder hydraulischen, sich auf den Kolben (6) des Zylinders (5) auswirkenden Druckes durch einem elektronischen Meßwandler (47) geschieht.

**Claims**

1. Static penetrometer, comprising an element (1) which is sunk into the ground (20) and which is used to accommodate a jack (5, 6) having an approximately horizontal axis (4) and of which the piston (6), which is subjected to the pressure of a hydraulic or pneumatic fluid on at least one of its surfaces, is integral with a rod (8) designed to be driven laterally into the ground (20) or retracted into the interior of the said element (1), means (26, 40, 41, 47) being provided to register the position of the said rod (8) and to measure the pressure exerted thereon, the said element being integral at the lower end with a set of rods for sinking the said element into the ground, this element also being connected to tubes of hydraulic or pneumatic fluid and to other connection lines, characterised in that the element for accommodating the said jack is a cylindrical-conical point, which is designed to be sunk into the ground (20), the reaction force for driving the rod (8) into the ground (20) being produced as a result of the lateral contact of this cylindrical-conical point (1) on the ground, and in that the rods of the said set of rods comprise tubes (2) which contain the fluid pipes (16, 17) and other connection lines (42, 48).

2. Static penetrometer according to claim 1, characterised in that the pressure on the jack (5) having a horizontal axis (4) is exerted, at least in the direction of the driving of the rod (8) into the ground (20), by means of a hydraulic fluid, which is subjected to pressure by a compressed gas provided from a gas source (21), means (25, 26) being provided for measuring the pressure and the volume of the latter, with a view to determining the resistance of the ground (20) and to registering the position of the rod (8).

3. Static penetrometer according to claim 2, characterised in that the jack is double-acting, the said gas acting directly on the other surface of the piston (6) for the retraction of the rod (8).

4. Static penetrometer according to claim 2, characterised in that the pipes comprise a single flexible pipe (16), which transmits the pressure for driving the rod (8) into the ground (20), the retraction force which leads to the retraction of the said rod (8) being produced by a helical spring (39).

5. Static penetrometer according to any one of the claims 2 or 3, characterised in that the said pipes comprise two flexible pipes (16, 17), which connect the equipment in the open air and the element (1) sunk into the ground (20), one containing the hydraulic fluid acting in the direction in which the rod (8) is driven in, and the other being provided for the retraction of the said rod (8), the flexible pipe (16) which contains the hydraulic fluid being preferably surrounded by a coaxial pipe (31) containing gas.

6. Static penetrometer according to claim 5, characterised in that the gas source (21) can be connected by means of a valve (32) either to the coaxial pipe (31) or to the other said flexible pipes.

7. Static penetrometer according to claim 1, characterised in that the position of the rod (8) sunk laterally into the ground (20) is registered by an inductive displacement transducer (40, 41), of which the electro-magnetic windings are disposed in the exterior casing (5) of the jack having a horizontal axis (4).

8. Static penetrometer according to claim 7, characterised in that the measuring of the pneumatic or hydraulic pressure applied to the piston (6) of the jack (5) is effected by an electronic transducer.

FIG.1

FIG.3

FIG.4

0 032 648

FİG.2

FİG.5